(19) Europäisches Patentamt
European Patent Office
Office européen des brevets

(11) **EP 3 672 153 B1**

(12) **EUROPEAN PATENT SPECIFICATION**

(45) Date of publication and mention
of the grant of the patent:
**24.03.2021 Bulletin 2021/12**

(51) Int Cl.:
***H04L 12/24*** *(2006.01)*

(21) Application number: **18306760.2**

(22) Date of filing: **20.12.2018**

(54) **ANOMALY DETECTION IN DATA FLOWS WITH CONFIDENCE INTERVALS**

ANOMALIEDETEKTION IN DATENSTRÖMEN MIT KONFIDENZINTERVALLEN

DÉTECTION D'ANOMALIES DANS DES FLUX DE DONNÉES AYANT DES INTERVALLES DE CONFIANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2020 Bulletin 2020/26**

(73) Proprietor: **Worldline**
**95870 Bezons (FR)**

(72) Inventors:
• **EDWARDS, Jonathan**
**3512NH Utrecht (NL)**
• **HATTAB, Dalila**
**59147 Gondecourt (FR)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**EP-A1- 2 882 139      US-A1- 2015 088 783**
**US-A1- 2018 324 199**

• **YIN ZHANG ET AL: "Fast accurate computation of large-scale IP traffic matrices from link loads", ACM SIGMETRICS PERFORMANCE EVALUATION REVIEW, ASSOCIATION FOR COMPUTING MACHINERY, NEW YORK, NY, US, vol. 31, no. 1, 10 June 2003 (2003-06-10), pages 206-217, XP058093687, ISSN: 0163-5999, DOI: 10.1145/885651.781053**

**Description**

FIELD OF THE INVENTION

The invention relates to the prediction of anomalies in a set of data related to services provided on telecommunication networks. In particular, the invention aims in reducing the amount of false positives in the resulting predictions.

BACKGROUND OF THE INVENTION

Telecommunication networks allow to provide many services to users, either final consumers or business entities. Due to the now vastly-available cloud-based platforms, these services are more and more numerous and involve a huge number of entities, like servers (individual or as "farms" or datacenters), network elements, the service itself, other applications, etc.

Monitoring such services so as to determine or predict potential issues involves then to monitor many metrics related to all the entities involved in the deployment of the services. What's more, all these metrics can be monitored with higher and higher resolutions, so that the volume of date to be handled to assess the status of the monitored service is becoming huge.

It is usual to monitor these available data visually by displaying charts on a computer screen, or filtering them by threshold, so as to trigger some alerts when some data trespasses the set thresholds.

However threshold-based mechanisms cannot work well, because of the practical impossibility to define a threshold. The behavior of the metrics evolves with time, without such behavior being an anomaly. Therefore a static threshold could not qualify to address the problem. In addition, each system is different and has its own behavior. Therefore, setting a threshold would require a deep understanding on the behavior of the services and of its underlying elements (software or hardware), so as to be able to discriminate between normality and anomalies US Patent Application Publication US2018/0324199 A1 discloses a anomaly detector which monitors a stream of time-series data and identifies statistical outliers of the stream of the time-series data, based upon the statistical model. An anomalous score is determined for the statistical outliers by tracking their history. European Patent Application EP2882139 A1 discloses anomaly detection by measuring different computing performance features such as CPU load, memory consumption, I/O level of activity at some specific frequency and then, consolidating point anomalies to higher-level objects called incidents. Each incident is checked according to specific parameters and if the checked incident is found to be an anomaly incident, the incident triggers an incident alert, which is communicated to a system administrator.

The invention aims in finding a solution, or at least an improvement, over the existing proposals known in the art. In particular, it proposes to adapt to the dynamic nature of the metrics as well as to the unique behavior of each system to be monitored.

SUMMARY OF THE INVENTION

The object of the present invention is to alleviate at least partly the above mentioned drawbacks. More particularly, the invention aims to determine accurate confidence intervals so as to determine anomalies with a low rate of false positives.

This object is achieved with a method for monitoring a service deployed over a telecommunication network according to appended independent claim 1.

Preferred embodiments comprise one or more of the following features:

- said at least two models comprise at least one of a group comprising the $\mu$-rule, the Seasonal Trend using Loess filtering, STL, ARIMA, TBATS and NNAR;
- said residuals comprise residuals from the fitted value of said models, and residuals from the predictions of said models;
- said step of defining confidence intervals for said residuals comprises an estimation of the standard deviation of said residuals by a GARCH model.

Another aspect of the invention concerns an apparatus for monitoring a service deployed over a telecommunication network according to appended independent claim 5.

Still another aspect of the invention relates to a system network according to appended independent claim 6.

Further features and advantages of the invention will appear from the following description given as nonlimiting examples, with reference to the accompanying drawings listed hereunder.

## BRIEF DESCRIPTION OF THE DRAWINGS

FIG. 1 depicts an overall architecture wherein the invention can be deployed according to an embodiment of the invention.

FIG. 2 depicts a more detailed view of an embodiment of an automated diagnostic engine according to embodiments of the invention

FIG. 3 depicts an organigram illustrating embodiments of the method according to the invention.

FIG. 4 depicts a process of using a boxplot on the data, according to embodiments of the invention.

FIGS. 5a, 5b and 5c represent curves showing the difference between the fitting and forecast and the real values according to embodiments for the calculation of the confidence interval.

## DETAILED DESCRIPTION OF THE INVENTION

The invention finds some useful applications when the amount of data to be handled in order to monitor a system is very large. A typical use case is financial application hosted on a platform, that can transport financial messages (transactions) between acquires and issuers. The network as a whole can reach over 1000 transactions per second (tps) with individual connections running at over 40 tps. In such a context, it is important to detect problems as early as possible.

The invention can tackle similar scalability issue in other technical domains wherein services are available on a telecommunication network, for instance deployed over a network cloud.

One of the aims of the invention is to reduce the false positives, i,e, to only trigger alerts on a reduced number of situations wherein the probability of the detected data is high to be an anomaly. This involves getting a deep understanding of the behavior of the flows of measured data of the service so as to discriminate between anomalies and normal behavior, bearing in mind that this normal behavior may evolve along the time due to other (external or internal) parameters.

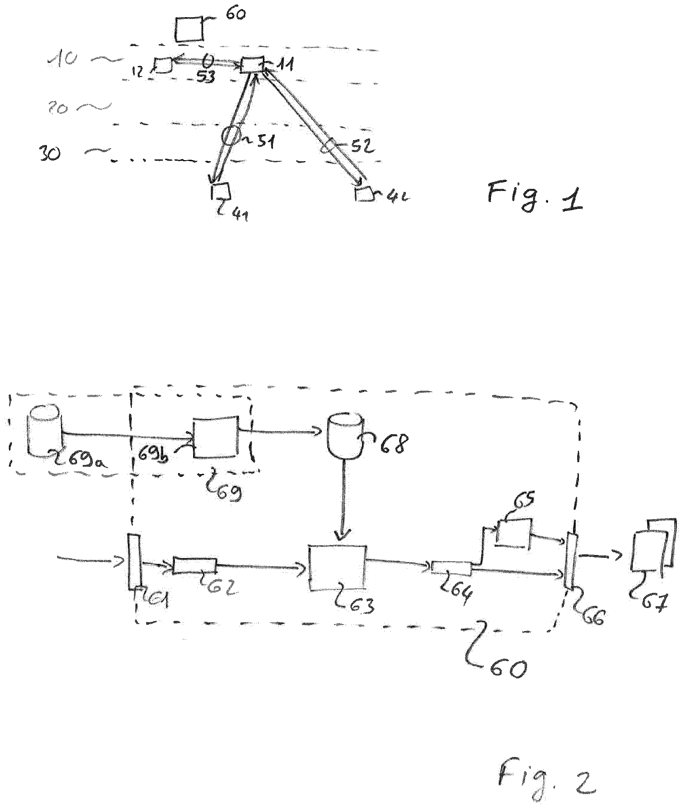

FIG. 1 depicts an overall architecture wherein the invention can be deployed according to an embodiment of the invention.

The architecture is simplified into 3 layers: a service layer 10, an abstraction layer 20 and an infrastructure layer 30. A service, for example a financial service, 11 is deployed on the service layer 10. Transactions 51, 52, 53 may occur between the service 11 and some end-users 41, 42 or with other services 12.

According to an aspect of the invention, the service 11 is associated with an automatic diagnostic engine 60, which is alimented by flows of data corresponding to metrics associated with the monitored service 11.

FIG. 2 depicts a more detailed view of an embodiment of such an automated diagnostic engine 60. It comprises interfaces 61 enabling to receive flows of data corresponding to the monitored service 11.

These flows correspond to metrics associated to said service. They may be provided by the service 11 itself or by any of the underlying layers, e.g. the abstraction layer 20 or infrastructure 30. In particular, these metrics may correspond to parameters available at the service itself, or parameters of the cloud on which the service is deployed, or parameters of the networking elements deploying the cloud, or the telecommunication network allowing interactions with the service by other services or end-users.

Examples of such metrics could be: server CPU used, server memory used, number of connections on a database, number of packet passed through a network connection, numbers of requests sent to a Web application, number of mails/SMS sent by the users, etc.

The data may be formatted so as to include an identifier of the corresponding metric, at least a value, and a date/time at which this data has been measured for this metrics.

Each flow of data, corresponding to one metric, is forwarded by the interfaces 61 to an input queue 62. This queue may be subdivided into a set of input queues, each of them associated to a particular flow of data.

The input queues 62 are consumed by a streaming anomaly detector 63. This streaming anomaly detector 63 is a module configured to dynamically detect anomalies on the flows of data while consuming them.

Any anomalies detected are reported to an output anomaly queue 64. The anomalies may be formatted to contain the related metrics, the value(s) and date/time. The skilled person would understand that deviations are possible to such a generic scheme. This queue may be subdivided into a set of output queues, each of them associated to a particular flow of data.

The output anomaly queue 64 may be consumed dynamically by an alert generator 65, configured to generate an alert pushed to external applications 67 through output interfaces 66. External applications 67 may also access to the output anomaly queue 64 through these interfaces 66 according to a "pull" model.

The streaming automated detector 63 can make use of pre-trained models 68 which reflects the normal behavior for the flows of data. Thanks to this pre-trained models 68, the detector 63 can compare the expected normal behavior derived from the pre-trained models.

The models 68 can be trained by a training chain 69 made of a normal behavior learner 69b and a base of historical metrics data 69a. The feed of historical metrics data is provided by flows of data corresponding to the monitored service(s) 11; they are then stored in the base 69a and dated (timestamped) so as to constitute this base of historical metrics data, on which the normal behavior can be modeled. The models correspond each to one metric, so that the Streaming Anomaly Detector 63 can detect anomalies within a flow of data corresponding to a given metric according to the appropriate models (i.e. trained for the same metric).

In some situations, the "normality" of the behavior varies with the time in the day. This is for instance the case of human-related data, like network traffic or financial transactions, since humans have different behaviors themselves according to the time in a day. Consequently, the models can be retrained according to the time of the day (for instance) so that the streaming anomaly detector 63 can determine anomalies according to up-to-date models. Such a mechanism allows a dynamic adaptation of the detection.

The automatic diagnostic engine 60 can be embodied in several ways, including a stand-alone software application module, and a software application deployed on an abstraction layer like a cloud.

According to aspects of the invention, the models are constituted by unsupervised learning schemes.

According to aspects of the invention, the normal behavior is modeled by at least two models.

It is understood that unsupervised learning suffers from an outstanding difficulty to find all anomalies without, in the same time, increasing the rate of false positive. The propositions known in the art adopts diverse trade-off between the rate of false positives (which shall be as low as possible) and the detection rate (which shall be as high as possible). In particular, the unsupervised learning mechanisms face the technical difficulty to distinguish between anomalies and noise.

According to the invention, instead of pursuing with improving a model to capture the behavior of flow of data, several models are used, each of them capturing one "view" or "aspect" of the behavior, or statistical phenomenon. Based on these several models, the streaming anomaly detectors 63 can determine anomalies with better performances (high detection rate with low false positive rate) by determining a consensus between the responses of each of the model on a same inputted flow of data.

According to embodiments, it is further proposed to build a confidence interval more accurately that could help filtering the extreme deviation in the value which contributes to reduce the ratio of false positives in the context of unsupervised learning.

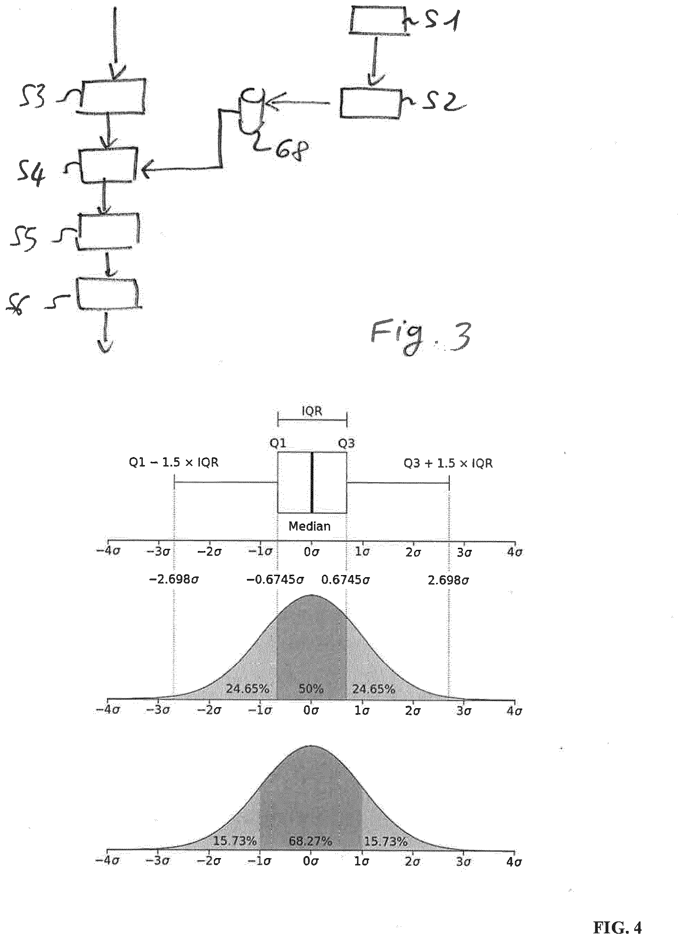

FIG. 3 depicts an organigram illustrating embodiments of the method according to the invention.

According to embodiments of the invention, the flows of data corresponding to the monitored metrics are cleaned, step S1, before feeding the model learning step S2, implemented by the Normal behavior learner 69b.

There are at least two main interests in cleaning the input data.

A first advantage is to avoid missing data or "fake" data called outliers like data with a value of 0 in the middle of a serial of data with non-0 values. These situation may correspond to noise, or errors in measurements or in the measurement acquisition chain, and should be "cleaned" and not considered in the learning process since non representative of neither the normal behavior nor a "real" anomaly.

A second advantage is to avoid the models to learn about time series with the potential outliers that need to be detected, i.e. which correspond to the anomalies and not the normal behavior of the dataflow.

This part is a tough one, because of its extrication with the subsequent modeling step. One problem is to avoid modifying a data which is in reality normal by the cleaning step and giving it a new value that would make it classified as "anomaly" by the modeling step S2.

The cleaning step S1 may be subdivided into several steps

A first step S11 may consist in applying a logarithmic unit for the considered metric. This may be possible for metrics having only positive values, which is the case for metrics related to telecommunication networks, financial transactions, etc. Such a change in units is interesting because it provides more perspective to the values, especially for large values. It further improves the following cleaning step S13.

In a subsequent step, a smoothing step S12 can be applied consisting in using e.g. median smoothing method. This median is the value separating the data sample, a population or a probability distribution into two halves.

After the smoothing S12 is applied, a boxplot-based cleaning step S13 is applied on the results to detect remaining outliers and cut them off.

FIG. 4 depicts this process of using a boxplot on the data.

The upper signal shows the original data, which typically is represented as Gaussian curve around a media value. Q1 and Q3 represent two quartiles. The first quartile Q1 is defined as the middle number between the smallest number and the median of the data set. The second quartile is the median of the data. The third quartile Q3 is the middle value between the median and the highest value of the data set.

We can then define IQR as IQR=Q3-Q1. The lower whisker has for value a=Q1-1,5xIQR, and the upper whisker has for value b=Q3+1.5*IQR.

We can then consider that the points outside of the whisker are outliers that should be corrected. Then they can be brought closer to the extreme whisker by applying the following calculations:

$$if \ x < a, \ x \leftarrow \frac{x}{2} + \frac{a + Q1}{4}$$

$$if \ x > b, \ x \leftarrow \frac{x}{2} + \frac{b + Q2}{4}$$

This process may be iterated (for example 5 times) so as to further reduce the number of outliers for the boxplot.

Once the data have been cleaned, S1, they are fed to the modeling steps S2.

This step S2 comprises the training of at least two models. According to some embodiments around 5 different models are trained, so as to provide a diversity of views of the behavior of the flows of data, with the assumption that the more diversity is captured, the closer to the real behavior we can model.

One of model 68 which can be used could be the so-called "$\mu \pm 3.\sigma$" rule. This model is a model well-known in art consisting in classifying as anomalies any data lying 3 or more deviations ($\sigma$) away from the mean ($\mu$).

This model is based on two assumptions: the underlying data distribution is normal and the time serial is stationary.

In an embodiment applied to financial transactions, such a model is very good at alerting in real-time anomalies in the percentage of transactions that get rejected. From an implementation point of view, the software module implementing this model can get commands to score whether a rejection rate looks like an anomaly. The command contains an identifier of the data stream, the time window of the data, the average transaction rate and rejection rate during the time windows, and a threshold that must be exceeded for a record to be inserted in the anomaly queue.

The module fetches the expected rejection rate from the database. The input data and the score are inserted into the historical metrics data 69a. They are also inserted into the output anomaly queue 64 if the score exceeds the threshold specified in the input request.

Another mechanism which can be used by the modeling step S2 by the normal behavior learner 69b to feed the models 68 is usually called Seasonal Trend using Loess filtering, STL. This method is for instance described in-Cleveland, RB & Cleveland, WS. (1990). STL: A seasonal-trend decomposition procedure based on Loess. Journal of Official statistics 6(1) · January 1990. Some basic implementations are also freely available like for instance at https://stat.ethz.ch/R-manual/R-devel/library/stats/html/stl.html

Basically, the model is based on a decomposition of the time serial in three components. Each data xt (wherein t represent the time) can then be written:

$$x_t = t_t + s_t + \varepsilon_t$$

Wherein:

- $t_t$ represents the trend, i.e. the global behavior of the serial;
- $s_t$ represents the seasonality (for instance, the consumption maybe higher in winter than in summer). Several seasonality may be provided (yearly, monthly, dayly....) depending on the behavior of the serial.
- $\varepsilon_t$ represents the remainder, which can be considered as noise.

Another mechanism which can be embodied in step S2 is called "ARIMA", for AutoRegressive - Integrated - Moving Average, first described in Box, G.E.P. & Jenkins, G.M. (1976). Time series analysis: Forecasting and control. Oakland, CA : Holden-Day.

It is further described on the wikipedia encyclopedia: https://en.wikipedia.org/wiki/Autoregressive integrated moving average

An auto-regressive model is a model in which we can assume that the actual value of the time serial depends on the previous value of it. For example, an auto-regressive model of rank k verifies:

$$y_t = c + \varphi_1 y_{t-1} + \ldots + \varphi_p y_{t-p} + \varepsilon_t$$

The next value can be calculated by applying this result recursively on the next value.

The principle of Moving average is based on the assumption that the actual values of the time serial depend on the past forecast errors. The model can be written for

$$\varepsilon_t = \hat{y}_t - y_t$$

As:

$$y_t = \varepsilon_t + \hat{y}_t = c + \varepsilon_t + \theta_1 \varepsilon_{t-1} + \cdots + \theta_p \varepsilon_{t-p}$$

The ARIMA model can also take into account the seasonality of a time serial by including seasonal lags in the different model.

ARIMA combines an auto-regressive model and a moving average model and may include seasonal lags. The only parameters to define are the degrees of the different models and a seasonal lags called P&Q, and the coefficient

Still another model which can be trained in step S2 can be based on the TBATS, which stands for "Trigonometric Box-Cox ARMA residuals, Trend and Seasonality". This method has been introduced in De Livera, Alysha M., Rob J. Hyndman, and Ralph D. Snyder. "Forecasting time series with complex seasonal patterns using exponential smoothing." Journal of the American Statistical Association 106, no. 496 (2011): 1513-1527.

A BATS model uses the Box-Cox transformed time serials and models a trend a seasonal with ARMA errors (p, q) as an HW model. In a TBATS, the seasonality is analyzed with Fourier series and modeled as a sum of trigonometric functions.

Still another model can be based on NNAR, "Neural Network Auto-Regressive" model.

The auto-regressive version of the NNAR model can be used. It uses a feed-forward network with one hidden layer. The input layer is fed with a time window history and the seasonal part of the series. In the output layer, comprising a single neuron, the next data point $y_t$ is predicted.

The NNAR model may have as parameters:

- M: the number of periods per season;
- p: the number of last historical values of the series: $y_{t-1}, y_{t-2}, \ldots y_{t-p}$.
- s: the number of values of the last seasonal period m: $y_{t-m}, y_{t-2m}, \ldots, y_{t-sm}$;
- k: the number of neurons in the hidden layer;

The output of a given neuron is given by the typical formula:

$$y = \sigma\left(\sum_{i=0}^{k} y_i w_i\right)$$

wherein

- $w_k$ is the weight of the links between the neuron k and the considered neuron;
- $y_k$ is the output of the neuron k of the previous layer, which is fed as input of the considered neuron; and
- $\sigma$ is an activation function (in order to add some non-linearity to the model.

Many other models can be considered to provide different views of the behavior of the flows of data to be monitored. It should be here understood that the invention shall not be limited to any of them, or any combinations of them, but lies in a particular way to aggregate the results of each of them, and their respective contributions, so as to derive from them a more robust final prediction with a lower false positive rate.

It shall be also understood that the final false positive rate is lower than any of the false positive rate of each of the considered models.

It shall further be appreciated that the considered models make use of the seasonality. Several levels of seasonality can be used, i.e. with different periods wherein a seasonal bias can be modeled. For instance, such periods may be the day, the week, the month, the year, etc. In embodiments related to financial transactions, a 2-level seasonality can be used: a weekly seasonality and a daily seasonality based on the 5 working days on the week.

The trained models 68 can then be used by the streaming anomaly detector 63.

In a step S3, the flows of data are received from the telecommunication network, and inserted into the input queue 62.

In a step S4, the streaming anomaly detectors 63 consumes the input queue 62 and applies the flows of data retrieved from the input queue to the models 68. Such applications enable to check whether the inputted flows match with the trained model and, consequently, whether they comply with the behavior which has been learnt as "normal".

Any data which cannot be matched with the models 68 will form a "residual".

In statistics and optimization, errors and residuals are two closely related and easily confused measures of the deviation of an observed value of an element of a statistical sample from its "theoretical value". The error (or disturbance) of an observed value is the deviation of the observed value from the (unobservable) true value of a quantity of interest (for example, a population mean), and the residual of an observed value is the difference between the observed value and the estimated value of the quantity of interest (for example, a sample mean).

The distinction is most important in regression analysis, where the concepts are sometimes called the regression errors and regression residuals and where they lead to the concept of studentized residuals.

In other words, the residuals represent the difference between the true collected value and expected normal behavior deduced from the training

According to aspects of the invention, in order to detect anomalies, two kinds of residuals can be considered:

- The residuals from the fitted values of the models. The different models provide fitted values for the training dataset which allow to get the difference between the fitted values and the original values (before the cleaning step) as residuals;
- The residuals from the predictions by looking at the difference between the last points we got from the dataset and the predictions made by the models for these points.

If one assumes the various models to be accurate enough, one can make the assumption ant the residuals follow a centered normal distribution. The inventors have experimentally proven this hypothesis to be true, based on numerous datasets.

Consequently, one can detect points that are outliers of a normal distribution as anomalies.

In order to define more precisely which residuals should be considered as anomalies, several embodiments can be considered.

A first ideal can be to use standard deviation and to define a confidence interval. However, experimental trials have proven this method to be not efficient enough, in particular for very regular series for which the standard deviation is very low and for series with major failures for which the standard deviation can be very high.

Consequently, other approaches should be used, like for instance the GEST method.

GEST stands for Generalized Extreme Studentized deviate Test and has been first described in Rosner, Bernard (May 1983), Percentage Points for a Generalized ESD Many-Outlier Procedure, Technometrics, 25(2), pp. 165-172. It aims in detect one or more outliers in a univariate data set that follows an approximately normal distribution.

The process of the GEST method comprises:

- The computation of the maximum of the z-score, noted $R_i$ as:

$$R_i = \frac{max|x_i - \bar{x}|}{s}$$

- wherein $\bar{x}$ and s denote respectively the sample mean and the sample standard deviation.
- The observation which maximizes $|x_i - \bar{x}|$ is then removed from the sample and the above calculation is performed again with n-1 observations. The process is iteratively repeated until r observations have been removed. At the end, one gets the R-test statistics: $R_1$, $R_2$... $R_r$;
- Then, r critical values can be computed corresponding to the r test statistics, with the following formula:

$$\lambda_i = \frac{(n-i)t_{p,n-i-1}}{\sqrt{\left(n-i-1+t_{p,n-i-1}^2\right)(n-i-1)}}$$

with i=1,2,...r, and wherein $t_{p,v}$ is the 100p percentage point from the t distribution with v degrees of freedom and

$$p = 1 - \frac{\bar{\alpha}}{2(n - i + 1)}$$

$\alpha$ being a significance level.

The number of outliers is then determined by finding the largest i such that $R_i > \lambda_i$

This algorithm allows automatically defining an optimized threshold for outlier detection and allows reducing the false positive rate.

According to embodiments of the invention, one can take into account the value of the series compared to the value of the residuals. For instance, with the previously described GEST scheme, a residual of 1 when the value is 1 (100% difference) is less considered as a residual than a residual of 2 when the value of the time series is 100 (2% difference). In order to reduce this bias, one can make use of the so-called "Pearson's residuals" which consist in dividing the residuals by the square root of the value of the metric.

According to aspects of the invention, once the residuals have been determined, we associated to them confidence intervals.

Typically, the models can provide inherently some confidence intervals associated with their results. However, experiences have proven that the software modules implementing these models show low computation time when required to provide confidence intervals.

In consequence, in a step S5, confidence intervals are defined with respect to the previously determined residuals, in an efficient way.

One assumes that the models are accurate enough (e.g. well trained) and that the differences between the value provided by the model and the real values (i.e. the residuals) are normally distributed around zero.

According to embodiments of the invention, after calculating the standard deviation of the residuals serial, one can build the confidence interval by using the z-score of the desired percentage;

If the population mean and population standard deviation are known, the standard score of a raw score x is calculated as

$$z = \frac{x - \mu}{\sigma}$$

where $\mu$ is the mean of the population and $\sigma$ is the standard deviation of the population.

The absolute value of z represents the distance between the raw score and the population mean in units of the standard deviation, z is negative when the raw score is below the mean, positive when above.

Calculating z using this formula requires the population mean and the population standard deviation, not the sample mean or sample deviation. But knowing the true mean and standard deviation of a population is often unrealistic except in cases such as standardized testing, where the entire population is measured.

When the population mean and the population standard deviation are unknown, the standard score may be calculated using the sample mean and sample standard deviation as estimates of the population values.

In these cases, the z score is

$$z = \frac{x - \bar{x}}{S}$$

where $\bar{x}$ is the mean of the sample and S is the standard deviation of the sample.

Then, for instance, for a 95% confidence interval, the factor used is 1.96.

The interval can be defined by a lower value at value-factor*standard deviation, and upper value at value+factor*standard deviation.

The lower the percentage is, the higher is the factor and the smaller is the confidence interval.

According to embodiments of the invention, some improvements are brought to the computation of the confidence intervals, in order to further decrease the rate of false positives. The underlying idea is that the better we estimate the confidence intervals, the better we can focus on the most extreme data points.

According to such embodiments, firstly, one estimates the confidence interval by using the median absolute deviation of the residuals. The media absolute deviation is the lo- / hi- median of the absolute deviations from the media value of the residuals. The anomalies in the residuals are the data point outside the confidence interval based on media absolute deviation at 95% level can be calculated by:

$$\text{Upper value} = +1.95 * \text{median absolute deviation}$$

$$\text{Lower value} = -1.95 * \text{median absolute deviation}$$

Such computation provides many detected data points. Then the idea is to use other models in order to reduce the number of anomalies with a more accurate confidence interval.

To better estimate the standard deviation of the residuals, we use the GARCH model. The GARCH(p,q) (Generalized AutoRegressive Conditional Heteroskedasticity) family of models is generally employed for volatility forecasting. They are for instance described on Wikipedia: https://en.wikipedia.org/wiki/Autoregressive_conditional_heteroskedasticity. They were first introduced in Engle, Robert F. (1982). "Autoregressive Conditional Heteroscedasticity with Estimates of the Variance of United Kingdom Inflation". Econometrica. 50 (4): 987-1007. JSTOR 191277

In these models, the key concept is the conditional variance on the past. In the classical GARCH models, the conditional variance is expressed as a linear function of the squared past values of the series. This particular specification is able to capture the main stylized facts characterizing the series.

All GARCH models assume that the residuals rt defined in equation can be expressed as the sum of two components ARMA-GARCH, noted by rt:

$$r_t = E(r_t | \Omega_{t-1}) + \varepsilon_t$$

wherein E(.|.) represents the conditional expectation operator, $\Omega t$ is the information set a time t-1, and $\varepsilon_t$ represents the innovations or residuals of the time series. In the first phase, the best of the ARMA models is used to model the linear data of time series. In the second phase, the GARCH is used to model the nonlinear pattern of the residuals. This hybrid model which combines an ARMA model with GARCH error components is applied to predict an approximation of the future return series.

ARMA Mean Equation

The ARMA(P,Q) process of autoregressive order P and moving average order Q can be described as

$$r_t = \mu + \sum_{i=1}^{P} a_i r_{t-i} + \sum_{j=1}^{Q} b_j \varepsilon_{t-j} + \varepsilon_t$$

wherein $\mu$ is the mean, $a_i$ is the autoregressive coefficients and $b_j$ is the moving average coefficients.

In an embodiment, we consider the estimation of the mean made by a ARMA (P = 1, Q = 1).

GARCH Variance Equation

The mean equation cannot take into account the heteroskedastic effects of the time series process typically observed in form of fat tails, as clustering residuals, and the leverage effect.

The $\varepsilon_t$ terms in the ARMA mean equation are the innovations of the time series process. The autoregressive conditional heteroscedastic process where all $\varepsilon_t$ are of the form defined by:

$$\varepsilon_t = \sigma_t z_t, \ z_t \sim \mathbb{N}(0,1)$$

The stochastic component $\varepsilon_t$ can be further decomposed and expressed as the product between a sequence of independent and identically distributed random variables zt with null mean and unit variance and a time varying scaling factor $\sigma t$.

The core of the model we use, is the variance equation using defined by:

$$\sigma_t = \sqrt{(\omega + \zeta\sigma_t^1) + \sum_{j=1}^{p} \beta_j(\sigma_{t-j})^2 + \sum_{i=1}^{q} \alpha_i\varepsilon_{t-i}^2}$$

The skew-generalized error distribution is used when estimating and forecasting GARCH models. To estimate the parameters, the hybrid strategy solver is used as a model optimization of the log-likelihood function.

On can define the Value At Risk, VaR, as the quantile of loss as the worst cases of a distribution, over a given time period and given a specified degree of confidence.

This "Value At Risk" concept is for instance explained on Wikipedia: https://en.wikipedia.org/wiki/Value_at_risk

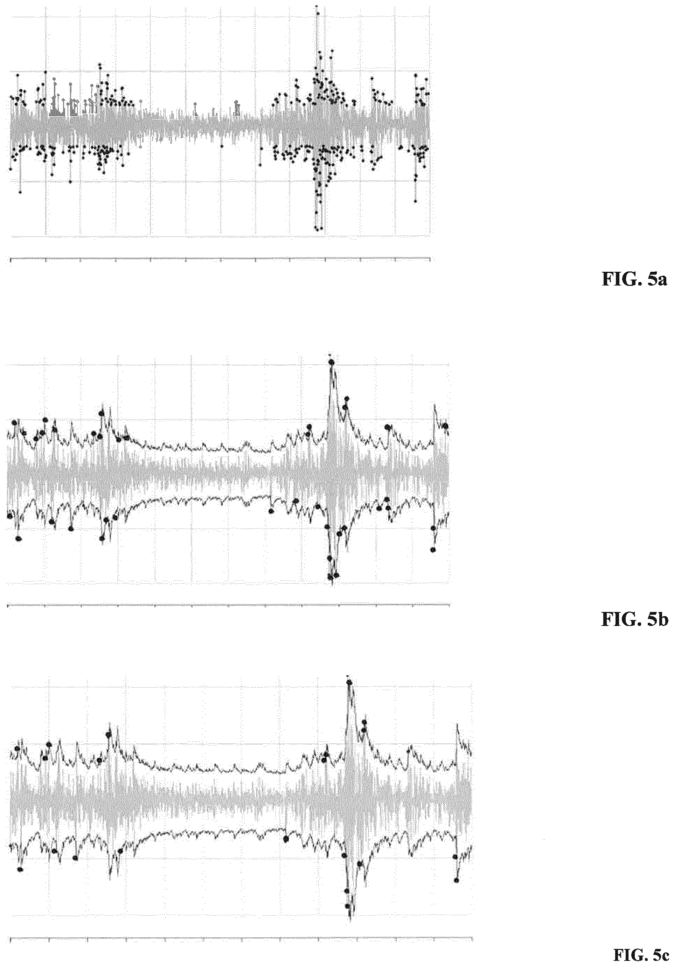

FIG. 5a shows as bold dots the anomalies filtered as deviations from the confidence interval based on the medial absolute value of the original residuals themselves.

FIGS 5b and 5c show the anomalies filtered as deviations from the confidence intervals based on the median absolute values of the VaR defined in the worst case of the distribution when modeling the residuals by the GARCH model. On FIG. 5b, the confidence interval is at 95% level and on FIG. 5c, the confidence interval is at 85% level.

On the figures, the envelope curves depict the predictions, which surrounds the real values. When the real values trespass the envelop, the related points represent anomalies (depicted as dark dots on the figures).

On FIG 5b, the confidence interval at 95% level is calculated by:
mad= median absolute deviation (VaR)

$$lower=VaR-1.95*mad$$

$$upper=-1*VaR+1.95*mad$$

On FIG 5c, the confidence interval at 85% level is calculated by:
mad= median absolute deviation (VaR)

$$lower=VaR-1.44*mad$$

$$upper=-1*VaR+1.44*mad$$

It appears clearly that the number of detected anomalies is much lower on FIG. 5c

Experiments have further shown that the number of deviated data points is reduced compared to the results while using the median absolute value on residuals. The GARCH method (associated with VaR) provides substantial improvement for the determination of the confidence intervals, so as to determine the "best" anomalies, i.e. with a low rate of false positives.

Indeed, the inventors have undertaken experiments regarding the way to calculate the confidence intervals:

- Based on the standard deviation of the residuals, which correspond to the way known in the art;
- Based on the media absolute deviation applied to the residuals, which corresponds to the example depicted on FIG. 5a.
- Based on the media absolute deviation applied VaR extracted from the GARCH modeling values of the residuals, which corresponds to the examples depicted on FIG. 5b and 5c.

These experiments have demonstrated that the second and third ways have clearly better performances than the first way.

Once the confidence intervals determined and, as a consequence, the anomalies, these data can be inserted by the streaming anomaly detector 63 into the output anomaly queue 64.

As previously described, they can be provided, at a step S6, to external applications 67 as alert ("push" model) and as responses to queries ("pull" model).

The invention has been described with reference to preferred embodiments. However, many variations are possible within the scope of the invention as defined by the appended claims.

**Claims**

1. Method for monitoring a service deployed over a telecommunication network, comprising:

   - a step of receiving (S3) flows of data corresponding to metrics corresponding to said service;
   - a step of determining (S4) residuals of an application of said flows of data on at least two models previously trained on historical data,
   - a step of defining (S5) confidence intervals for said residuals; and,
   - a step of transmitting (S6) data related to anomalies detected on the base of said residuals and said confidence intervals, to external applications,
   - further comprising a step of cleaning (S1) said historical data and a step of training (S2) said at least two models on the cleaned data

   wherein said step of cleaning (S1) comprise a at least one of applying (S11) a logarithmic unit for said metrics, using a median smoothing method (S12) on said flows of data and applying (S13) a boxplot-based cleaning step on said flows of data, said boxplot-based cleaning step comprising defining a boxplot for said historical data, defined by a first quartile, Q1, being the middle number between the smallest number and the median number of said historical data, a second quartile, Q2, being the median for said historical data, and a third quartile, Q3, being the middle value between the median value and the highest value of said historical data; defining an IQR value as IQR=Q3-Q1, defining a lower whisker a as a=Q1-1.5xIQR, and an upper whisker b as b=Q3+1.5*IQR
   and correcting historical data by applying

   $$if\ x < a, x \leftarrow \frac{x}{2} + \frac{a + Q1}{4}$$

   $$if\ x > b, x \leftarrow \frac{x}{2} + \frac{b + Q2}{4}$$

2. Method according to claim 1, wherein said at least two models comprise at least one of a group comprising the $\mu$-rule, the Seasonal Trend using Loess filtering, STL, ARIMA, TBATS and NNAR.

3. Method according to any of the previous claims, wherein said residuals comprise residuals from the fitted value of said models, and residuals from the predictions of said models.

4. Method according to the previous claim, wherein said step of defining (S5) confidence intervals for said residuals comprises an estimation of the standard deviation of said residuals by a GARCH model.

5. Apparatus (60) for monitoring a service (11) deployed over a telecommunication network (20, 30), comprising:

   - interfaces (61) configured to receive flows of data corresponding to metrics corresponding to said service, and inserting them into an input queue (62);
   - a streaming anomaly detector (63) configured to retrieve said flows of data from the input queue and to determine residuals of the application of said flows of data on at least two models (68) previously trained on historical data, and configured to define confidence intervals for said residuals; and,
   - otput interfaces (66) configured to transmit anomalies based on said residuals and said confidence intervals, to an external application (67);
   - said apparatus further comprising means for cleaning said historical data and a normal behavior learner (69) for training said at least two models on the cleaned data

   wherein said means for cleaning are configured for doing at least one of applying a logarithmic unit for said metrics, using a median smoothing method on said flows of data and applying a boxplot-based cleaning step on said flows of data, said boxplot-based cleaning step comprising defining a boxplot for said historical data, defined by a first quartile, Q1, being the middle number between the smallest number and the median number of said historical data, a second quartile, Q2, being the median for said historical data, and a third quartile, Q3, being the middle value between the median value and the highest value of said historical data; defining an IQR value as IQR=Q3-Q1, defining a lower whisker a as a=Q1-1.5xIQR, and an upper whisker b as b=Q3+1.5*IQR

and correcting historical data by applying

$$if\ x < a, x \leftarrow \frac{x}{2} + \frac{a + Q1}{4}$$

$$if\ x > b, x \leftarrow \frac{x}{2} + \frac{b + Q2}{4}$$

6. System comprising an apparatus according to claim 5 and at least one external application (67).

**Patentansprüche**

1. Verfahren zur Überwachung eines Dienstes, der über ein Telekommunikationsnetzwerk bereitgestellt wird, umfassend:

   - einen Schritt eines Empfangens (S3) von Datenflüssen, die Metriken entsprechen, die dem Dienst entsprechen;
   - einen Schritt eines Bestimmens (S4) von Resten einer Anwendung der Datenflüsse auf mindestens zwei Modelle, die zuvor mit historischen Daten geschult wurden,
   - einen Schritt eines Definierens (S5) von Konfidenzintervallen für die Reste und
   - einen Schritt eines Übertragens (S6) von Daten in Bezug auf Anomalien, die auf der Basis der Reste und der Konfidenzintervalle erkannt wurden, an externe Anwendungen,
   - weiterhin umfassend einen Schritt eines Säuberns (S1) der historischen Daten und einen Schritt eines Schulens (S2) der mindestens zwei Modelle mit den gesäuberten Daten,

   wobei der Schritt des Säuberns (S1) mindestens eines von einem Anwenden (S11) einer logarithmischen Einheit für die Metriken, einem Verwenden eines Medianglättungsverfahrens (S12) auf die Datenflüsse und einem Anwenden (S13) eines Säuberungsschritts auf Boxplot-Basis auf die Datenflüsse, wobei der Säuberungsschritt auf Boxplot-Basis ein Definieren eines Bloxplots für die historischen Daten, definiert durch ein erstes Quartil, Q1, das die mittlere Zahl zwischen der kleinsten Zahl und der Medianzahl der historischen Daten ist, ein zweites Quartil, Q2, das der Median für die historischen Daten ist, und ein drittes Quartil, Q3, das der mittlere Wert zwischen dem Medianwert und dem höchsten Wert der historischen Daten ist; ein Definieren eines IQR-Werts als IQR = Q3 - Q1, ein Definieren eines unteren Whiskers a als a = Q1 - 1,5 x IQR und eines oberen Whiskers b als b = Q3 + 1,5 * IQR und ein Korrigieren von historischen Daten durch Anwenden von wenn

$$x < a, x \leftarrow \frac{x}{2} + \frac{a + Q1}{4}$$

wenn

$$x > b, x \leftarrow \frac{x}{2} + \frac{b + Q2}{4}$$

umfasst.

2. Verfahren nach Anspruch 1, wobei die mindestens zwei Modelle mindestens eines von einer Gruppe umfassend die $\mu$-Regel, den Saison-Trend unter Verwendung von Loess-Filterung, STL, ARIMA, TBATS und NNAR umfassen.

3. Verfahren nach einem der vorhergehenden Ansprüche, wobei die Reste Reste von dem angepassten Wert der Modelle und Reste von den Vorhersagen der Modelle umfassen.

4. Verfahren nach dem vorhergehenden Anspruch, wobei der Schritt des Definierens (S5) von Konfidenzintervallen für die Reste eine Schätzung der Standardabweichung der Reste durch ein GARCH-Modell umfasst.

**5.** Vorrichtung (60) zur Überwachung eines Dienstes (11), der über ein Telekommunikationsnetzwerk (20, 30) bereitgestellt wird, umfassend:

- Schnittstellen (61), die dazu konfiguriert sind, Datenflüsse, die Metriken entsprechen, die dem Dienst entsprechen, zu empfangen und sie in einer Eingangswarteschlange (62) einzufügen;
- einen Streaming-Anomaliendetektor (63), der dazu konfiguriert ist, die Datenflüsse aus der Eingangswarteschlange abzurufen und Reste einer Anwendung der Datenflüsse auf mindestens zwei Modelle (68), die zuvor mit historischen Daten geschult wurden, zu bestimmen, und dazu konfiguriert ist, Konfidenzintervalle für die Reste zu definieren; und
- Ausgangsschnittstellen (66), die dazu konfiguriert sind, Anomalien auf der Basis der Reste und der Konfidenzintervalle an eine externe Anwendung (67) zu übertragen;
- wobei die Vorrichtung weiterhin Mittel zum Säubern der historischen Daten und einen Normales-Verhalten-Schulungseinheit (69) zum Schulen der mindestens zwei Modelle mit den gesäuberten Daten umfasst,

wobei die Mittel zum Säubern zum Durchführen von mindestens einem von einem Anwenden einer logarithmischen Einheit für die Metriken, einem Verwenden eines Medianglättungsverfahrens auf die Datenflüsse und einem Anwenden eines Säuberungsschritts auf Boxplot-Basis auf die Datenflüsse konfiguriert sind, wobei der Säuberungsschritt auf Boxplot-Basis ein Definieren eines Bloxplots für die historischen Daten, definiert durch ein erstes Quartil, Q1, das die mittlere Zahl zwischen der kleinsten Zahl und der Medianzahl der historischen Daten ist, ein zweites Quartil, Q2, das der Median für die historischen Daten ist, und ein drittes Quartil, Q3, das der mittlere Wert zwischen dem Medianwert und dem höchsten Wert der historischen Daten ist; ein Definieren eines IQR-Werts als IQR = Q3 - Q1, ein Definieren eines unteren Whiskers a als a = Q1 - 1,5 x IQR und eines oberen Whiskers b als b = Q3 + 1,5 * IQR und ein Korrigieren von historischen Daten durch Anwenden von wenn

$$x < a, x \leftarrow \frac{x}{2} + \frac{a + Q1}{4}$$

wenn

$$x > b, x \leftarrow \frac{x}{2} + \frac{b + Q2}{4}$$

umfasst.

**6.** System, umfassend eine Vorrichtung nach Anspruch 5 und mindestens eine externe Anwendung (67).

## Revendications

**1.** Procédé de surveillance d'un service déployé sur un réseau de télécommunication, comprenant :

- une étape de réception (S3) de flux de données correspondant à des métriques correspondant audit service ;
- une étape de détermination (S4) de résidus d'une application desdits flux de données sur au moins deux modèles précédemment entraînés sur des données historiques,
- une étape de définition (S5) d'intervalles de confiance pour lesdits résidus ; et,
- une étape d'émission (S6) de données se rapportant à des anomalies détectées sur la base desdits résidus et desdits intervalles de confiance, vers des applications externes,
- comprenant en outre une étape de nettoyage (S1) desdites données historiques et une étape d'entraînement (S2) desdits au moins deux modèles sur les données nettoyées

dans lequel ladite étape de nettoyage (S1) comprend au moins l'une parmi l'application (S11) d'une unité logarithmique pour lesdites métriques, l'utilisation d'un procédé de lissage médian (S12) sur lesdits flux de données et l'application (S13) d'une étape de nettoyage basée sur une boîte à moustaches sur lesdits flux de données, ladite étape de nettoyage basée sur une boîte à moustaches comprenant la définition d'une boîte à moustaches pour lesdites données historiques, définie par un premier quartile, Q1, qui est le nombre central entre le plus petit nombre et le nombre médian desdites données historiques, un deuxième quartile, Q2, qui est la médiane pour lesdites données historiques, et un troisième quartile, Q3, qui est la valeur centrale entre la valeur médiane et la valeur la plus élevée desdites données historiques ; la définition d'une valeur IQR comme étant IQR = Q3 - Q1, la définition d'une moustache inférieure a comme étant a = Q1 - 1.5 x IQR, et d'une moustache supérieure b comme étant b = Q3 + 1.5 * IQR et la correction de données historiques par l'application de

$$si\ x < a, x \leftarrow \frac{x}{2} + \frac{a + Q1}{4}$$

$$si\ x > b, x \leftarrow \frac{x}{2} + \frac{b + Q2}{4}$$

2. Procédé selon la revendication 1, dans lequel lesdits au moins deux modèles comprennent au moins l'un parmi un groupe comprenant la règle μ, le filtrage de tendance saisonnière par Loess, STL, ARIMA, TBATS et NNAR.

3. Procédé l'une quelconque des revendications précédentes, dans lequel lesdits résidus comprennent des résidus provenant de la valeur ajustée desdits modèles, et des résidus provenant des prédictions desdits modèles.

4. Procédé selon la revendication précédente, dans lequel ladite étape de définition (S5) d'intervalles de confiance pour lesdits résidus comprend une estimation de l'écart-type desdits résidus par un modèle GARCH.

5. Appareil (60) de surveillance d'un service (11) déployé sur un réseau de télécommunication (20, 30), comprenant :

 - des interfaces (61) configurées pour recevoir des flux de données correspondant à des métriques correspondant audit service, et les insérer dans une file d'attente d'entrée (62) ;
 - un détecteur d'anomalie de diffusion (63) configuré pour récupérer lesdits flux de données à partir de la file d'attente d'entrée et pour déterminer des résidus de l'application desdits flux de données sur au moins deux modèles (68) précédemment formés sur des données historiques, et configuré pour définir des intervalles de confiance pour lesdits résidus ; et,
 - des interfaces de sortie (66) configurées pour émettre des anomalies sur la base desdits résidus et desdits intervalles de confiance, vers une application externe (67) ;
 - ledit appareil comprenant en outre des moyens pour nettoyer lesdites données historiques et un apprenant de comportement normal (69) pour entraîner lesdits au moins deux modèles sur les données nettoyées

dans lequel lesdits moyens de nettoyage sont configurés pour effectuer au moins l'une parmi l'application d'une unité logarithmique pour lesdites métriques, l'utilisation d'un procédé de lissage médian sur lesdits flux de données et l'application d'une étape de nettoyage basée sur une boîte à moustaches sur lesdits flux de données, ladite étape de nettoyage basée sur une boîte à moustaches comprenant la définition d'une boîte à moustaches pour lesdites données historiques, définie par un premier quartile, Q1, qui est le nombre central entre le plus petit nombre et le nombre médian desdites données historiques, un deuxième quartile, Q2, qui est la médiane pour lesdites données historiques, et un troisième quartile, Q3, qui est la valeur centrale entre la valeur médiane et la valeur la plus élevée desdites données historiques ; la définition d'une valeur IQR comme étant IQR = Q3 - Q1, la définition d'une moustache inférieure a comme étant a = Q1 - 1.5 x IQR, et d'une moustache supérieure b comme étant b = Q3 + 1.5 * IQR et la correction de données historiques par l'application de

$$si\ x < a, x \leftarrow \frac{x}{2} + \frac{a + Q1}{4}$$

$$si\ x > b, x \leftarrow \frac{x}{2} + \frac{b + Q2}{4}$$

6. Système comprenant un appareil selon la revendication 5 et au moins une application externe (67) .

Fig. 1

Fig. 2

Fig. 3

FIG. 4

FIG. 5a

FIG. 5b

FIG. 5c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180324199 A1

- EP 2882139 A1

**Non-patent literature cited in the description**

- **CLEVELAND, RB ; CLEVELAND, WS.** STL: A seasonal-trend decomposition procedure based on Loess. *Journal of Official statistics,* January 1990, vol. 6 (1
- **BOX, G.E.P. ; JENKINS, G.M.** Time series analysis: Forecasting and control. Holden-Day, 1976
- wikipedia encyclopedia
- **DE LIVERA ; ALYSHA M. ; ROB J. HYNDMAN ; RALPH D. SNYDER.** Forecasting time series with complex seasonal patterns using exponential smoothing. *Journal of the American Statistical Association,* 2011, vol. 106 (496), 1513-1527

- **ROSNER, BERNARD.** *Percentage Points for a Generalized ESD Many-Outlier Procedure, Technometrics,* May 1983, vol. 25 (2), 165-172
- *Wikipedia, https://en.wikipedia.org/wiki/Autoregressive_conditional_heteroskedasticity*
- **ENGLE, ROBERT F.** Autoregressive Conditional Heteroscedasticity with Estimates of the Variance of United Kingdom Inflation. *Econometrica,* 1982, vol. 50 (4), 987-1007